(19) **Europäisches Patentamt**

**European Patent Office**

**Office européen des brevets**

(11) **EP 0 790 506 B1**

(12) **FASCICULE DE BREVET EUROPEEN**

(45) Date de publication et mention
de la délivrance du brevet:
**13.06.2001 Bulletin 2001/24**

(51) Int Cl.⁷: **G01V 1/20**, G10K 11/34

(21) Numéro de dépôt: **97400212.3**

(22) Date de dépôt: **30.01.1997**

(54) **Antenne linéaire acoustique avec dispositif de levée d'ambiguité**

Lineare akustische Antenne mit Vorrichtung zur Zweideutigkeitsauflösung

Linear acoustic antenna with device for ambiguity resolution

(84) Etats contractants désignés:
**BE DE ES FI GB IT NL SE**

(30) Priorité: **15.02.1996 FR 9601844**

(43) Date de publication de la demande:
**20.08.1997 Bulletin 1997/34**

(73) Titulaire: **DELEGATION GENERALE POUR L'ARMEMENT**
**Paris - 7ème (FR)**

(72) Inventeur: **Cortambert, Jean Marc**
**53177 Bonn (DE)**

(56) Documents cités:
WO-A-93/13433          DE-A- 3 537 759
US-A- 4 129 874        US-A- 4 187 490

**Description**

L'invention concerne les antennes acoustiques et, plus particulièrement, les antennes linéaires composées d'hydrophones ou capteurs qui sont remorquées par des sous-marins ou des bâtiments de surface pour capter les signaux acoustiques dans le milieu environnant et détecter la présence de sources de tels signaux acoustiques.

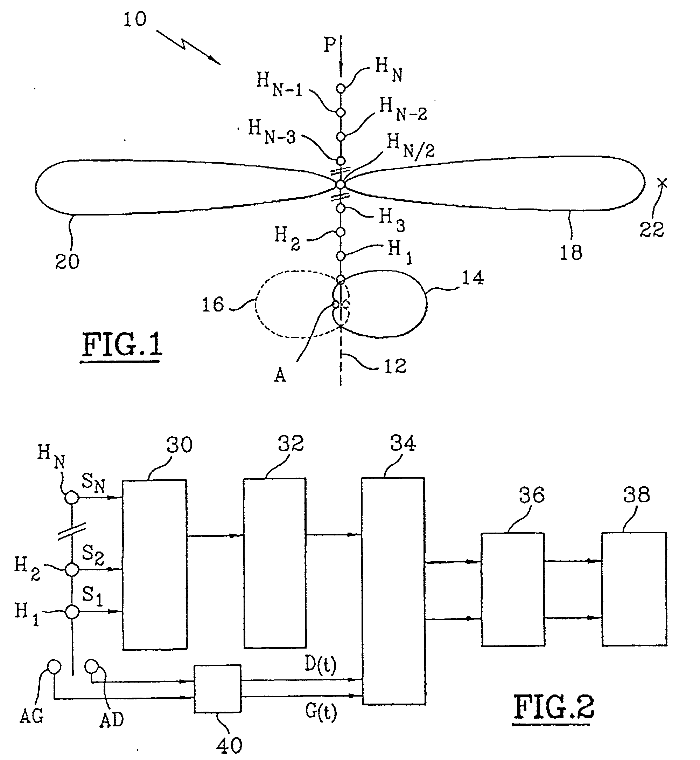

Il est connu d'utiliser une antenne linéaire composée de N hydrophones ou capteurs alignés, chaque hydrophone ayant un diagramme de directivité dans le plan horizontal en forme de cardioïde de part et d'autre de l'axe de l'antenne comme le montre les diagrammes 14 et 16 de la figure 1.

Pour que chaque hydrophone ait un tel diagramme de directivité, il est nécessaire qu'il soit constitué par au moins deux capteurs élémentaires convenablement disposés l'un par rapport à l'autre. En fait, pour des problèmes d'orientation de l'antenne linéaire par rapport au plan horizontal la contenant, chaque hydrophone est constitué de trois ou quatre capteurs élementaires.

Par suite du nombre de capteurs élémentaires utilisés pour réaliser chaque hydrophone, le coût d'une antenne linéaire composée de N hydrophones, avec N pouvant atteindre 100, est relativement élevé.

Le document US 4,187,490 divulgue un système de différenciation entre des torpilles à court et à long rayon d'action. Pour cela le système prévoit une chaîne d'éléments en ligne, chacun d'eux comprenant un transducteur omnidirectionnel et un transducteur bidirectionnel. Ce système permet de lever l'ambiguïté de la direction de provenance des torpilles ainsi que leur nature. Cependant, ce système est efficace si les transducteurs bidirectionnels sont convenablement orientés. L'utilisation d'un grand nombre de ces derniers rend le système difficile à utiliser et donc coûteux à mettre en oeuvre.

Un but de la présenté invention est donc de réaliser une antenne linéaire composée de N hydrophones dont le coût total serait moins élevé que celui d'une antenne à directivité en forme de cardioïde.

Pour parvenir à ce but, l'invention propose de réaliser une antenne linéaire omnidirectionnelle composée de N hydrophones à directivité omnidirectionnelle et d'une antenne auxiliaire à diagramme de directivité en forme de cardioïde et de corréler les signaux des deux antennes pour lever l'ambiguïté droite-gauche.

L'invention concerne une antenne linéaire acoustique omnidirectionnelle avec dispositif de levée d'ambiguïté caractérisée en ce qu'elle comprend :

- une antenne principale linéaire (P) formée de N capteurs omnidirectionnels distribués de façon équidistante le long de cette antenne et fournissant chacun un signal $S_i(t)$ ( i variant de 1 à N),
- une antenne auxiliaire à directivité en forme de cardioide selon l'axe droite/gauche de l'antenne linéaire fournissant deux signaux, l'un D(t) pour le coté droit de l'antenne et l'autre G(t) pour le coté gauche,
- un dispositif formateur de voies recevant les signaux $S_i(t)$ pour obtenir n voies pointées $V_j(t)$, ( j variant de 1 à n) qui sont chacune une combinaison linéaire des signaux $S_i(t)$
- un dispositif de calcul de la cohérence entre les signaux des voies pointées, $V_j(t)$ et, d'une part, le signal D(t) et, d'autre part, le signal G(t) pour calculer deux valeurs de la cohérence droite COHER $[V_j(t), D(t)]$ et cohérence gauche COHER $[V_j(t), G(t)]$ et,
- un dispositif de comparaison des deux valeurs de cohérence pour déterminer le côté d'où provient le signal $V_j(t)$.

L'antenne auxiliaire est disposée à l'une des extrémités de l'antenne linéaire mais peut être disposée dans l'antenne linéaire. De préférence dans ce dernier cas, l'un des capteurs de l'antenne auxiliaire constituera l'élément omnidirectionnel.

D'autres caractéristiques et avantages de la présente invention apparaîtront à la lecture de la description suivante d'un exemple particulier de réalisation, ladite description étant faite en relation avec les dessins joints dans lesquels :

- la figure 1 représente schématiquement une antenne linéaire selon l'invention ainsi que les formes des diagrammes de directivité, et
- la figure 2 est un schéma fonctionnel montrant le traitement des signaux pour lever l'ambiguïté droite-gauche selon des caractéristiques de l'invention.

Une antenne linéaire 10 selon l'invention comprend une antenne principale P et une antenne auxiliaire A disposée, par exemple, à une des deux extrémités de l'antenne principale P. L'antenne principale P est constituée de N hydrophones ou capteurs $H_1$ à $H_N$ à directivité omnidirectionnelle qui sont équirépartis suivant un axe 12. L'antenne auxiliaire A est constituée d'un ensemble de deux capteurs qui sont disposés de manière connue pour présenter un diagramme de directivité en forme de deux cardioïdes, l'un référencé 14 à droite de l'axe 12 et l'autre référencé 16 à gauche de l'axe 12. Ces capteurs de l'antenne auxiliaire A sont référencés AG et AD.

Les signaux acoustiques détectés par les hydrophones $H_1$ à $H_N$ (figure 2)sont transformés respectivement

en signaux électriques $S_1$ à $S_N$ et, plus généralement $S_i(t)$ avec i variant de 1 à N, par des transducteurs piézoélectriques par exemple. Les hydrophones $H_1$ à $H_N$ sont connectés électriquement à un dispositif formateur de voies 30 qui réalisent des combinaisons linéaires des signaux $S_i(t)$ de manière à orienter le diagramme de directivité de l'antenne principale dans différentes directions dans le plan de la figure 1, chaque direction correspondant à une voie dite pointée.

Le signal $V_j(t)$ d'une voie d'ordre j est donné par l'expression :

$$V_j(t) = \sum_{i=1}^{N} S_i(t-\tau_j i)$$

$\tau$ étant l'angle d'inclinaison de la voie par rapport à l'axe 12 par exemple.

Dans le cas où la direction de la voie est perpendiculaire à l'axe 12, le lobe principal de l'antenne principale P est représenté, dans le plan de la figure 1, par les diagrammes 18 et 20.

Avec un tel lobe d'antenne omnidirectionnel, il n'est pas possible de déterminer si une source telle que 22 est située à droite ou à gauche de l'axe 12. Cette source 22 est détectée par un circuit de détection de type classique 32 qui peut faire partie intégrante du dispositif formateur de voies 30.

Pour lever cette ambiguïté droite/gauche, l'invention met en oeuvre les signaux fournis par l'antenne auxiliaire A, un signal électrique D(t) fourni par la voie cardioïde droite et un signal électrique G(t) fourni par la voie cardioïde de gauche. Ces signaux électriques D(t) et G(t) sont formés dans un dispositif formateur de voies cardioïdes 40 qui reçoit les signaux électriques fournis par les capteurs AG et AD.

Cette mise en oeuvre consiste à calculer la cohérence du signal $V_j(t)$ avec chacun des signaux D(t) et G(t) pour obtenir une valeur de cohérence droite et une valeur de cohérence gauche, ce qui permet de lever l'ambiguïté en retenant le côté où la valeur de la cohérence est la plus élevée.

Ces calculs de cohérence peuvent être effectués dans le domaine temporel ou dans le domaine fréquentiel dans un. dispositif de calcul 34.

La cohérence entre deux signaux X et Y est définie par :

$$\text{COHER}(X,Y) = \text{PROD}(X,Y)/[\text{PROD}(X,X).\text{PROD}(Y,Y)]^{1/2}$$

formule dans laquelle

$$\text{PROD}(X,Y) = \frac{1}{p} \sum_{1}^{p} X(k).Y^*$$

Ces calculs de cohérence dans le domaine temporel aboutissent à deux valeurs de cohérence, l'une droite COHER[$V_j(t)$,D(t)] et l'autre gauche COHER [$V_j(t)$, G(t)] qui sont comparés dans un circuit 38 pour déterminer la plus grande des deux valeurs et donc lever l'ambiguïté droite/gauche.

Pour lever l'ambiguïté avec un minimum d'erreur, l'invention propose d'effectuer une intégration des signaux de cohérence dans un circuit intégrateur 36 avant de les comparer.

L'invention a été décrite en disposant l'antenne auxiliaire A à une extrémité de l'antenne linéaire P mais elle est applicable à une antenne auxiliaire qui serait disposée à l'autre extrémité.

Dans une autre variante, l'antenne auxiliaire pourrait être disposée à un emplacement quelconque dans la série des N capteurs omnidirectionnels à condition de ne pas perturber le pas des capteurs.

Encore dans une autre variante, l'antenne auxiliaire peut être disposée à l'emplacement d'un des N capteurs omnidirectionnels mais dans ce cas l'un des capteurs de l'antenne auxiliaire serait utilisé comme élément omnidirectionnel.

**Revendications**

**1.** Antenne linéaire acoustique omnidirectionnelle avec dispositif de levée d'ambiguité comprenant

- une antenne principale linéaire (P) formée de N capteurs omnidirectionnels distribués de façon équidistante le long de cette antenne et fournissant chacun un signal $S_i(t)$ ( i variant de 1 à N),

- une antenne auxiliaire (A, 40) à directivité en forme de cardioide selon l'axe droite/gauche de l'antenne linéaire fournissant deux signaux, l'un D(t) pour le coté droit de l'antenne et l'autre G(t) pour le coté gauche,
- un dispositif formateur de voies (30, 32) recevant les signaux $S_i(t)$ pour obtenir n voies pointées $V_j(t)$, ( j variant de 1 à n) qui sont chacune une combinaison linéaire des signaux Si(t)
- un dispositif de calcul (34) de la cohérence entre les signaux des voies pointées, $V_j(t)$ et, d'une part, le signal D(t) et, d'autre part, le signal G(t) pour calculer deux valeurs de la cohérence droite COHER[$V_j(t)$, D(t)] et cohérence gauche COHER[$V_j(t)$, G(t)] et,
- un dispositif de comparaison (38) des deux valeurs de cohérence pour déterminer le côté d'où provient le signal $V_j(t)$.

2. Antenne selon la revendication 1, comprenant un dispositif intégrateur (36) pour intégrer les signaux de cohérence droite COHER [Vj(t),D(t)] et gauche COHER [Vj(t),G(t)] avant de les appliquer au dispositif de comparaison (38).

3. Antenne selon la revendication 1 ou 2, dans laquelle l'antenne auxiliaire (A) comprend deux capteurs, (AG, AD) dont les signaux électriques sont combinés dans un dispositif formateur de voies cardioïdes (40) pour obtenir des signaux D(t) et G (t).

4. Antenne selon la revendication 1, 2 ou 3, dans laquelle l'antenne auxiliaire (A) est disposée à l'une des deux extrémités de l'antenne principale.

5. Antenne selon la revendication 1, 2 ou 3, dans laquelle l'antenne auxiliaire (A) est disposée entre deux capteurs successifs de l'antenne principale.

6. Antenne selon la revendication 1, ou 2 ou 3, dans laquelle l'antenne auxiliaire (A) est disposée à l'emplacement d'un capteur omnidirectionnel de l'antenne principale et comprend un capteur omnidirectionnel.

7. Antenne selon l'une quelconque des revendications précédentes 1 à 6, dans laquelle le dispositif formateur de voies inclut un dispositif de détection (32) d'une source rayonnante (22).


**Patentansprüche**

1. Lineare akustische Allrichtungsantenne mit einer Vorrichtung zur Auflösung der Mehrdeutigkeit, mit

- einer linearen Hauptantenne (P), die aus N Allrichtungsaufnehmern gebildet ist, die in gleichem Abstand längs dieser Antenne verteilt sind und jeweils ein Signal $S_i(t)$ (mit i von 1 bis N) liefern,
- einer Hilfsantenne (A, 40) mit einem herzförmigen Strahlungsdiagramm längs der Rechts-Links-Achse der linearen Antenne, die zwei Signale, eines, D(t), für die rechte Seite der Antenne und eines, G(t), für die linke Seite, liefert,
- einer Wegbildungsvorrichtung (30, 32), die die Signale $S_i(t)$ empfängt, um n ausgerichtete Wege $V_j(t)$ (mit j von 1 bis n) zu erhalten, die jeweils eine Linearkombination aus den Signalen $S_i(t)$ sind,
- einer Vorrichtung (34) zur Berechnung der Kohärenz zwischen den Signalen der ausgerichteten Wege $V_j(t)$ und einerseits dem Signal D(t) und andererseits dem Signal G(t), um zwei Kohärenzwerte, einen rechten, COHER[$V_j(t)$, D(t)], und einen linken, COHER[$V_j(t)$, G(t)], zu berechnen,
- einer Vorrichtung (38) zum Vergleichen der beiden Kohärenzwerte, um die Seite zu bestimmen, von der das Signal $V_j(t)$ stammt.

2. Antenne nach Anspruch 1, mit einer Integrationsvorrichtung (36) zum Integrieren der rechten Kohärenzsignale COHER[$V_j(t)$, D(t)] und der linken Kohärenzsignale COHER[$V_j(t)$, G(t)], bevor sie in die Vergleichseinrichtung (38) eingegeben werden.

3. Antenne nach Anspruch 1 oder 2, in der die Hilfsantenne (A) zwei Aufnehmer (AG, AD) umfaßt, deren elektrische Signale in einer Vorrichtung (40) zur Bildung herzförmiger Wege kombiniert werden, um Signale D(t) und G(t) zu erhalten.

4. Antenne nach Anspruch 1, 2 oder 3, in der die Hilfsantenne (A) an einem der zwei Enden der Hauptantenne angeordnet ist.

**5.** Antenne nach Anspruch 1, 2 oder 3, in der die Hilfsantenne (A) zwischen zwei aufeinanderfolgenden Aufnehmern der Hauptantenne angeordnet ist.

**6.** Antenne nach Anspruch 1, 2 oder 3, in der die Hilfsantenne (A) am Ort eines Allrichtungsaufnehmers der Hauptantenne angeordnet ist und einen Allrichtungsaufnehmer umfaßt.

**7.** Antenne nach einem der vorhergehenden Ansprüche 1 bis 6, in der die Wegbildungsvorrichtung eine Vorrichtung (32) zur Erfassung einer Strahlerquelle (22) enthält.

**Claims**

**1.** Omnidirectional, linear acoustic antenna with a device for eliminating ambiguity, comprising

- a main linear antenna (P) formed from N omnidirectional sensors distributed equidistantly along this antenna, and each delivering a signal $S_i(t)$, (i varying between 1 and N),
- an auxiliary antenna (A, 40) having a cardioid-shaped directivity along the right/left axis of the linear antenna, delivering two signals, one D(t) for the right-hand side of the antenna and the other G(t) for the left-hand side,
- a path developing device (30, 32) receiving the signals $S_i(t)$ to obtain n selected paths $V_j(t)$, (j varying between 1 and n), each of which is a linear combination of the signals $S_i(t)$,
- a device (34) for calculating the coherence between the signals of the selected paths and, on the one hand, the signal D(t) and, on the other hand, the signal G(t), in order to calculate two values of the right-hand coherence COHER $[V_j(t), D(t)]$ and the left-hand coherence COHER $[V_j(t), G(t)]$, and
- a device (38) for comparing the two coherence values in order to determine the side from which the signal Vj (t) originates.

**2.** Antenna according to Claim 1, comprising an integrating device (36) to integrate the right-hand coherence signals COHER $[V_i(t), D(t)]$ and the left-hand coherence signals CORER $[V_j(t), G(t)$ before applying them to the comparison device (38).

**3.** Antenna according to Claim 1 or 2, in which the auxiliary antenna (A) comprises two sensors (AG, AD) whose electrical signals are combined in a cardioid path shaping device (40) to obtain signals D(t) and G(t).

**4.** Antenna according to Claim 1, 2 or 3 in which the auxiliary antenna (A) is arranged at one of the two ends of the main antenna.

**5.** Antenna according to Claim 1, 2 or 3, in which the auxiliary antenna (A) is arranged between two successive sensors of the main antenna.

**6.** Antenna according to Claim 1, or 2 or 3, in which the auxiliary antenna (A) is arranged at the location of an omnidirectional sensor of the main antenna and includes an omnidirectional sensor.

**7.** Antenna according to any one of the preceding Claims 1 to 6, in which the path shaping device includes a device (32) for detecting a radiating source (22).

FIG.1

FIG.2